# EUROPEAN PATENT APPLICATION

(11) **EP 4 474 855 A1**
(43) Date of publication of application: **11.12.2024**
(21) Application number: 23178068.5
(22) Date of filing: 07.06.2023
(51) Int. Cl.: G01S 7/41, G01S 13/26, G01S 13/34, G01S 13/58, G01S 7/288, G01S 7/292, G01S 7/35, G01S 13/44

(54) **APPARATUS AND METHOD FOR GESTURE RECOGNITION, RADAR SYSTEM AND ELECTRONIC DEVICE**

(71) Applicant: Infineon Technologies AG, 85579 Neubiberg (DE)
(72) Inventor: STROBEL, Maximilian, 81539 München (DE); SCHOENFELDT, Stephan, 85667 Oberpframmern (DE); DAUGALAS, Jonas, 81541 München (DE); PAVLOV, Ivan, 81379 München (DE); STADELMAYER, Thomas Reinhold, 93173 Wenzenbach (DE)
(74) Representative: 2SPL Patentanwälte PartG mbB

(57) **Abstract**

An apparatus for gesture recognition is proposed. The apparatus comprises processing circuitry configured to obtain a data matrix indicating ranges over slow time based on radar data acquired by a radar sensor, determine a compact data matrix of reduced size through compressing the data matrix over slow time and determine a range interval of a target based on the compact data matrix. The processing circuitry is further configured to process exclusively the determined range interval in the data matrix for determining a movement of the target, extract a time-series of at least one feature of the movement and recognize a gesture based on the time-series of the at least one feature of the movement.

## Description

### Field

The present disclosure relates to radar-based gesture recognition. Examples relate to an apparatus for gesture recognition, a method for gesture recognition, a radar system and an electronic device.

### Background

Conventionally, gesture detection employs computationally intensive techniques to analyze range doppler maps in great detail. These algorithms are subjected to complex processing steps, including multi-dimensional Fourier transforms, doppler profile analysis, object segmentation, shape feature extraction and alike. These operations require substantial computational resources, such as memory or processor resources, and time-consuming computations, leading to high power consumption. Hence, there may be a demand for improved gesture detection.

### Summary

Some aspects of the present disclosure relate to an apparatus for gesture recognition, comprising processing circuitry configured to obtain a data matrix indicating ranges over slow time based on radar data acquired by a radar sensor, determine a compact data matrix of reduced size through compressing the data matrix over slow time, determine a range interval of a target based on the compact data matrix, process exclusively the determined range interval in the data matrix for determining a movement of the target, extract a time-series of at least one feature of the movement, and recognize a gesture based on the time-series of the at least one feature of the movement.

Some aspects of the present disclosure relate to a radar system, comprising an apparatus for gesture recognition as described herein, and the radar sensor, wherein the radar sensor is configured to acquire the radar data.

Some aspects of the present disclosure relate to an electronic device, comprising a radar system as described herein, and control circuitry configured to control an operation of the electronic device based on the recognized gesture.

Some aspects of the present disclosure relate to a method for gesture recognition, comprising obtaining a data matrix indicating ranges over slow time based on radar data acquired by a radar sensor, determining a compact data matrix of reduced size through compressing the data matrix over slow time, determining a range interval of a target based on the compact data matrix, processing exclusively the determined range interval in the data matrix for determining a movement of the target, extracting a time-series of at least one feature of the movement, and recognizing a gesture based on the time-series of the at least one feature of the movement.

### Brief description of the Figures

Some examples of apparatuses and/or methods will be described in the following by way of example only, and with reference to the accompanying figures, in which
Fig. 1 illustrates an example of an apparatus for gesture recognition;
Fig. 2 illustrates a range spectrum of an example of binned ranges;
Fig. 3 illustrates a flowchart of an example of a method for gesture recognition;
Fig. 4 illustrates a flowchart of another example of a method for gesture recognition;
Fig. 5 illustrates a table of an example of a time-series of features associated to an example of gestures;
Fig. 6 illustrates an example of a radar system;
Fig. 7 illustrates an example of an electronic device; and
Fig. 8 illustrates a flowchart of another example of a method for gesture recognition.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

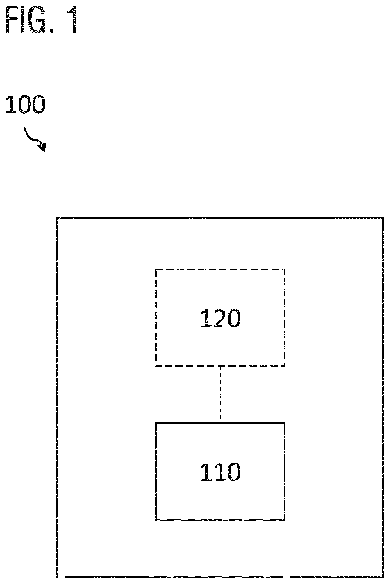

**Fig.** 1 illustrates a block diagram of an example of an apparatus 100 for gesture recognition. Gesture recognition refers to the detection and interpretation of gestures or movements of living beings using radar-based sensing. The recognized gestures may vary depending on the specific application and system design. For instance, gestures to be recognized may include hand waves, foot movements, finger movements, arm gestures, body movements, and alike.

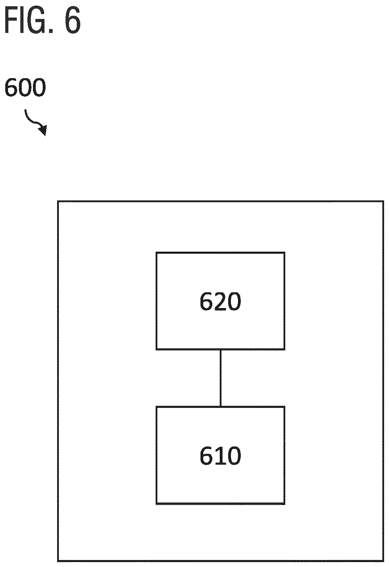

The apparatus 100 is to be considered in the context of a radar sensor. For instance, the apparatus 100 may be integrated into a radar system comprising the radar sensor such as explained below with reference to Fig. 6 or may be external to the radar system. In the former case, the apparatus 100 may be external to or (e.g., partially or fully) integrated into the radar sensor.

The apparatus 100 comprises processing circuitry 110 and, optionally, interface circuitry 120. In case interface circuitry 120 is present, the interface circuitry 120 may be communicatively coupled (e.g., via a wired or wireless connection) to the processing circuitry 110, e.g., for data exchange between the interface circuitry 120 and the processing circuitry 110. The apparatus 100 may optionally comprise memory (not shown) configured to store data, such as radar data, a data matrix (as explained below), or any result of processing thereof by the processing circuitry 110.

The interface circuitry 120 may be any device or means for communicating or exchanging data. In case the apparatus 100 comprises the interface circuitry 120, the interface circuitry 120 may be configured to receive (e.g., raw or pre-processed) radar data acquired by the radar sensor. For instance, the interface circuitry 120 may be communicatively coupled to the radar sensor or to a storage device storing the radar data. The interface circuitry 120 may receive the radar data, e.g., via a wired or wireless coupling to the radar sensor or the storage device. Alternatively, the interface circuitry 120 may be configured to receive a data matrix indicating ranges over slow time of the radar data. That is, pre-processing of the radar data may be performed externally to the apparatus 100, yielding the data matrix.

Depending on the specific implementation, the apparatus 100 may dispense with the interface circuitry 120: For example, the processing circuitry 110 may determine said radar data. For instance, the processing circuitry 110 may be integrated into the radar sensor. The radar sensor may be configured to emit a radio frequency signal into the field of view of the radar sensor and acquire the radar data based on a reflection of the radio frequency signal. The radar data may indicate a signal that is received by a receiver of the radar sensor. The radar data may, e.g., indicate an IF (intermediate frequency) signal of the radar sensor. The radar sensor may acquire the radar data by mixing the reflection with a local oscillator signal at a specific frequency. The processing circuitry 110 may determine the radar data by, e.g., sampling the IF signal and perform further processing of the radar data within the radar sensor. The processing circuitry 110 may optionally modify the sampled IF signal in a pre-processing step, e.g., for noise-reduction, DC-removal (direct current) or alike.

Alternatively, the processing circuitry 110 may partially determine the radar data. For instance, the processing circuitry 110 may determine a first part of the data, whereas at least one external processing circuitry may determine at least one second part of the data. The processing circuitry 110 and the external processing circuitry may, e.g., be connected within a distributed computing environment for jointly determining the data. In this case, the processing circuitry may either be integrated into the radar sensor or may be external to the radar sensor. The processing circuitry 110 may receive the second part of the radar data, e.g., via an interface to the external processing circuitry such as interface circuitry 120, and further process the first and the second part of the radar data, as described below.

In another alternative, the processing circuitry 110 is partially integrated into the radar sensor and is partially external to the radar sensor. In such cases, the interface circuitry 120 is optional. The processing circuitry 110 may, for instance, comprise a first part (first processing circuitry) which is integrated into the radar sensor and a second part (second processing circuitry) which is external to the radar sensor. In this case, the determination of the radar data and/or further processing, as described below, may be performed by the first and second part of the processing circuitry 110 in a distributed manner.

The processing circuitry 110 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 110 may optionally be coupled to, e.g., read only memory (ROM) for storing software, random access memory (RAM) and/or non-volatile memory.

The processing circuitry 110 is configured to obtain a data matrix indicating ranges over slow time based on the radar data acquired by the radar sensor. The radar data may be pre-processed or raw radar data. The processing circuitry 110 may, for instance, determine the data matrix based on the radar data, acquire the data matrix from an external pre-processing, or may partially determine the data matrix and receive the rest. In the first case, the processing circuitry 110 may be configured to determine the data matrix through fast time processing, e.g., through performing a Fourier transform along fast time or along distinct chirps of the radar data. For example, the processing circuitry 110 may perform a range FFT (fast Fourier transform) with the radar data, yielding ranges over slow time (range profiles, e.g., complex range profiles). The range FFT may translate IF signal values of the radar data into range profiles based on correlation and binning. The fast time processing may further involve an attenuation or removal of DC components and/or of a complex mean of the ranges to get rid of (quasi-) static targets.

In some examples, the processing circuitry 110 may be configured to determine the data matrix using a moving target indicator (MTI). In the latter case, ranges of a moving object may remain substantially unchanged or may be amplified in the data matrix whereas ranges of static objects are attenuated or discarded.

The data matrix may refer to an abstract nature of data representation or formatting, i.e., the data matrix may refer to an array or a matrix that holds data elements of the ranges over slow time. For instance, the data matrix may associate ranges (e.g., as fast time instances or binned range values) with corresponding slow time instances of slow time such that a subset of the ranges associated to a certain slow time instance are arranged along a specific dimension, e.g., comparable to a tabular format. The data matrix may thus indicate data points of the ranges at a specific instance of slow time. This may allow easier processing of the ranges. The data matrix may, optionally or alternatively, refer to a storage format, e.g., when storing the ranges over slow time in memory. For instance, the data matrix may be stored in a contiguous memory region, as an array of pointers, a linked list, or alike, to associate range values with their corresponding slow time instances.

The ranges over slow time may refer to (radial) distance values measured by the radar sensor within its field of view. The ranges may therefore indicate distances between the radar sensor and a surface or object in its surrounding. Slow time may refer to a temporal resolution of a duration in which radar measurements are taken, for instance, a duration of at least one radar pulse (e.g., a chirp) transmitted by the radar sensor. Slow time is to be distinguished from fast time which may refer to a temporal resolution within a single pulse-echo cycle or chirp.

The processing circuitry 110 is further configured to determine a compact data matrix of reduced size through compressing the data matrix over (along) slow time (or over chirps). The compact data matrix may have a reduced size in the sense that it has a smaller number of entries in comparison to the data matrix. For instance, the length of the slow time dimension of the compact data matrix may be reduced. In some examples, the processing circuity 110 may determine the compact data matrix by reducing the data matrix to a vector or a lower-dimensional matrix (compared to the data matrix) through compression. Determining the compact data matrix may, in some examples, be executed without performing a Fourier transform on the data matrix.

The (slow time) compression may refer to any method for data compression, e.g., averaging, over at least two radar measurements, chirps or slow time instances in the data matrix. Thereby, the at least two radar measurements, chirps or slow time instances may be combined to a single measurement, chirp or slow time instance. This may reduce noise and improve the accuracy of the measurements. Such a method for slow time compression may be, for example, a simplified averaging method (e.g., integrating ranges over slow time), a moving average method (e.g., averaging the ranges over a sliding window along slow time), a filtering method, a smoothing or weighting method or alike.

Additionally, the processing circuitry 110 may be configured to determine the compact data matrix through compressing, e.g., averaging, the data matrix over multiple channels of the radar data. For instance, the data matrix may have an additional dimension (e.g., a third dimension) by which the different channels are represented. The multiple channels of the radar data may correspond to data generated based on respective channels of the radar sensor. The radar sensor may, for instance, comprise multiple receiver channels, capturing respective portions of a radar signal from respective angles or viewpoints. The radar sensor may generate respective radar data for each of the receiver channels. The (channel) compression may combine (aligned or synchronized) radar measurements of at least two channels (e.g., of all channels). Channel compression may reduce random noise or interferences and improve the to improve the signal-to-noise ratio (SNR).

For combining slow time compression and channel compression, the processing circuitry 110 may integrate the magnitude of the (complex) ranges along the receive channels and chirps. The resulting compact data matrix may, e.g., be a one-dimensional vector that embodies the reflected energy of moving targets along the resolvable range.

The processing circuitry 110 is further configured to determine a range interval of a target based on the compact data matrix. The range interval may include one or more range bins in the compact data matrix for ranges where the target is assumed. The target may be a person or a body part of a person from whom a gesture is to be recognized. The assumption on which measured ranges belong to a target of interest may depend on the specific application of the apparatus 100. For instance, the compact data matrix may indicate multiple moving objects, e.g., leaving a signature in the compact data matrix with a sufficiently high signal amplitude. Then, the processing circuitry 110 may select one or more, a reduced subset or all of the detected moving objects as target of interest of which the range interval is determined.

The processing of a compact data matrix as proposed herein may enable an "early" target detection on range profiles which may reduce power consumption, memory and compute resources compared to conventional gesture recognition. This may be especially useful or even required when implementing gesture recognition on deeply embedded target platforms with limited resource availability. Conventionally, targets and their ranges are determined by creating range doppler maps (or images) to detect, e.g., the closest target in front of a radar sensor. The creation of such a range doppler map may prevent the reduction of the original data matrix. The conventional approach may include the following steps: Depending on the velocity resolution (number of chirps per frame) used, a number of chirps has to be emitted and received back by the radar sensor; a digital representation of the chirps (radar data) has to be stored in memory such as RAM (random access memory) and Fourier transformed to obtain range profiles; and another Fourier transform is performed for each bin in the range profile of each chirp in a frame of the radar data. By contrast, the apparatus 100 may get by with a significant lower usage in RAM, CPU (central processing unit) time and power consumption. With the proposed apparatus 100, an implementation on a smaller processor class may be realized.

In some examples, the processing circuitry 110 may be configured to determine the range interval of the target nearest and/or the target second nearest to the radar sensor based on the compact data matrix. For instance, when a potential disturber is assumed closest to the radar sensor, the processing circuitry 110 may process either only the second nearest target or both the nearest and the second nearest target for searching gestures of that target. Alternatively or additionally, any higher-order target, e.g., third-nearest target or alike, may be selected as target of interest. The higher-order target selection may also serve the recognition of gestures of more than one person in the surrounding of the radar sensor.

The processing circuitry 110 may select a target of interest, such as the nearest and/or second nearest target, and determine the range interval of the target of interest. For example, the processing circuitry 110 may determine the range interval (and/or select the target) through determining a local peak in the compact data matrix, e.g., through running a local peak search in the compact data matrix. One of the determined local peaks may be selected as the target, and the range interval may be determined accordingly, e.g., such that ranges of the selected target are included. Additionally or alternatively, the processing circuitry 110 may determine the target and its range interval by, e.g., thresholding, pattern recognition or alike.

In some examples, the determination of the target and of the range interval may be performed without applying any transformations, such as Fourier or Laplace transformations, to the compact data matrix.

Further, the compact data matrix may be pre-processed before the target is selected or the range interval is determined. In some examples, the processing circuitry 110 is further configured to filter the compact data matrix and determine the range interval based on the filtered compact data matrix. For instance, the processing circuitry 110 may be configured to filter the compact data matrix through performing a Gaussian smoothing on the compact data matrix. Gaussian smoothing may be applied to the ranges of the compact data matrix to reduce noise, suppress small-scale variations, or enhance the visibility of targets in the radar data.

Additionally or alternatively, the processing circuitry 110 may filter the compact matrix using any other filtering technique, such as median filtering or alike.

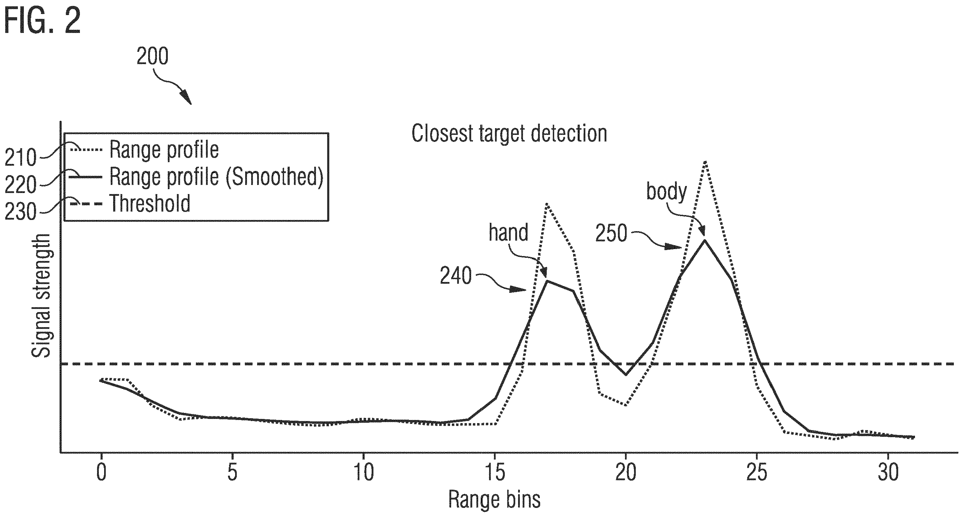

For gesture recognition of hand gestures, it may be assumed for a specific application that a person would perform a gesture towards the radar sensor, and the person's hand would likewise be assumed to be the closest moving target. Body movements of the person may cause a higher signal amplitude in the compact data matrix but may be more distant to the radar sensor than the hand, as illustrated by **Fig. 2****.**

Fig. 2 shows a range spectrum 200 of an example of binned ranges 210 of a compact data matrix and an example of binned ranges 220 of a smoothed compact data matrix. The ranges 210 as well as the ranges 220 are arranged as range profiles, i.e., the values of the ranges 210, 220 are binned in the range spectrum 200, thus, emphasizing dominant range bins which indicate the presence of a target.

In the example of Fig. 2, the ranges 220 cross a threshold 230 twice, resulting in a first peak 240 and a second peak 250. The threshold 230 may be set such that weak local maxima are suppressed, for avoiding false targets. The smaller first peak 240 at range bin 17 is caused by a moving hand of a person, the higher second peak 250 at range bin 23 is caused by a moving body of the person. A range interval may be determined to include range bin 17, and optionally neighboring range bins, e.g., such that range differences of the hand during its gesture can be captured. The peak 250 may be discarded in further processing for recognizing a gesture of the hand. This means that instead of selecting the target with the highest signal strength, corresponding to the body, the closest target is selected, corresponding to the hand. This may result in an efficient but stable target detection, which is more immune to random body movements of the person performing the gesture.

Referring back to Fig. 1, the processing circuitry 110 is further configured to process exclusively the determined range interval in the data matrix for determining a movement of the target. With the knowledge of the targets' range interval, the relevant processing (e.g., for extracting scattering characteristics) may be limited to this range interval which may increase the processing efficiency. Instead of performing slow time FFTs across all range bins to generate range doppler images like in conventional gesture recognition, the apparatus 100 may only process the range bins of interest (the range interval). The processing circuitry 110 may, for instance, discard other ranges (or range bins) in the data matrix than the ranges of the determined range interval. The range interval may, therefore, include a reduced subset of all detected ranges of moving targets or of all measurable ranges and thereby exclude at east one of the detected ranges or at least one of the measurable ranges.

The determination of the movement of the target may, for instance, include the extraction of a feature (characteristics) of the movement which may be used to detect a gesture to be recognized. The feature may be at least one of a range, a velocity, a signal amplitude, an elevation and an azimuth of the target causing the movement. Alternatively or additionally, the feature may be a phase difference between channels of the radar data. For example, the processing circuitry 110 may be configured to process exclusively the determined range interval in the data matrix through determining at least one of a velocity, an azimuth and an elevation of the target for the determined range interval. Features like the range and the signal amplitude of the target may be directly derivable from the compact data matrix, as explained above.

The exclusive processing of the determined range interval in the data matrix in order to extract features of the movement may increase the power and computational efficiency of the apparatus 100 since irrelevant ranges are excluded from processing. It may be based on any processing method, such as time-domain or frequency-domain processing. In the following, two examples of such methods are described in more detail. These approaches are not necessarily to be seen isolated from each other since they are combinable.

In a first example, the processing circuitry 110 is configured to process exclusively the determined range interval in the data matrix through determining a velocity representation (or doppler representation) of the data matrix for the determined range interval. The velocity representation may be determined by transforming the relevant part of the data matrix being within the range interval from the range-time domain to the velocity domain. This may yield a velocity profile with a reduced size compared to the conventional approach of creating a full range doppler map for all ranges. Each element of the velocity profile may represent the strength or amplitude of the radar return signal at a specific range within the range interval and velocity.

The velocity representation may be determined based on any technique for velocity analysis, such as matched filtering, determining ambiguity functions for varying ranges or compressive sensing. In some examples, the processing circuitry 110 is configured to determine the velocity representation of the data matrix through performing a Fourier transform, e.g., an FFT, along the slow time of the data matrix for the determined range interval. The latter may decrease the computational complexity compared to any direct computation of the velocity. In cases where the data matrix is determined based on a Fourier transform, as well, both Fourier transforms may be combined to a two-dimensional Fourier transform on the radar data.

The (radial) velocity of the movement of the target may then be derivable form the velocity representation. For example, the processing circuitry 110 may be configured to determine the velocity through determining a peak in the velocity representation of the data matrix. For instance, the velocity representation may be searched for a maximum value (amplitude), and the resulting position within the velocity representation may indicate the radial velocity whereas the maximum value may indicate the signal magnitude. As an optional pre-processing, the velocity representation may be integrated across the above-mentioned channels, and the velocity may be derived from the resulting integrated velocity representation.

The first example may, on the one hand, increase the power and computational efficiency of gesture recognition and, on the other hand, provide a feature extraction with high accuracy due to the determination of a velocity representation comprising only the relevant values (the determined range interval).

If further features like azimuth and elevation are to be determined, these may be derived from the velocity representation. For example, the processing circuitry 110 may be configured to apply a phase-comparison monopulse on the velocity representation of the target for determining at least one of the azimuth and the elevation. The phase-comparison monopulse technique may include comparing the values of different channels with each other. This comparison may involve measuring the phase differences between the signals. Various techniques may be employed to perform this phase comparison, such as using phase detectors or phase shifters. Then, an angle of arrival may be estimated by processing the phase differences obtained from the phase comparison are processed. The angle estimation may include ratio monopulse, difference monopulse, or sum and difference monopulse. In order to further reduce the processing efforts, the processing circuitry 110 may apply the phase-comparison monopulse on the velocity representation (exclusively) for the determined peak in the velocity representation. In other examples, any alternative method may be used to extract an angle of the target, such as amplitude-comparison monopulse, time-difference of arrival technique, cross-correlation or alike.

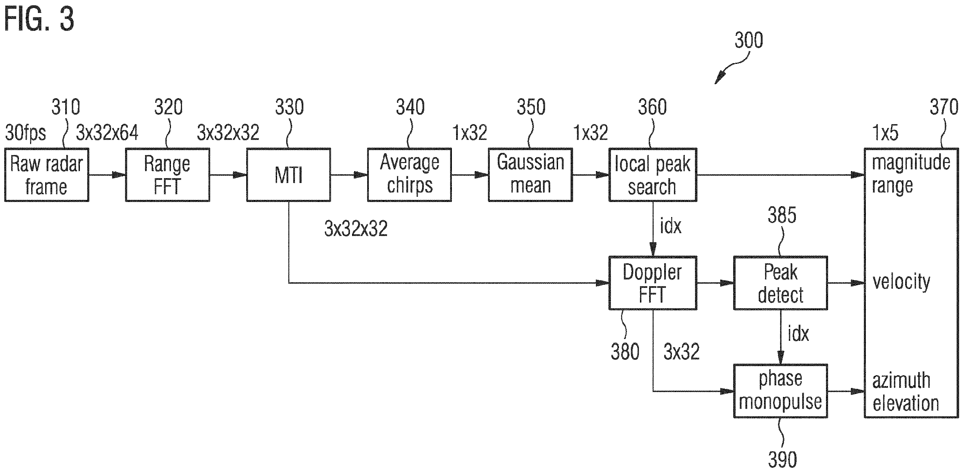

A concrete implementation of the first example is further illustrated by **Fig. 3.** Fig. 3 shows a flowchart of an example of a method 300 for gesture recognition. The method 300 may be executed by a processing circuitry of an apparatus for gesture recognition, such as apparatus 100.

The method 300 comprises receiving 310 (raw) radar data acquired by a radar sensor. The radar data is received at 30 frames per seconds (fps). One frame (or burst) may be represented as a three-dimensional array [R x C x S] with R = 3 (receive) channels, C = 32 being the length of the radar data along the slow time axis (or the number of chirps in the radar data), and S = 64 being the length of the radar data along the fast time axis. The frame rate, the number of channels and the length of the data matrix in the fast time or the slow time dimension shown in Fig. 3 are to be understood as mere examples for illustrative purposes. In other examples than the one shown in Fig. 3, the frame rate may be any number n ≥ 1 frames per unit of time; the number of channels may be any number R ≥ 1; the length of the radar data along the fast time axis and the slow time axis may be any number S ≥ 2 and C ≥ 2, respectively.

The method 300 further comprises obtaining 320 a data matrix (with R = 3, C = 32, S = 32) indicating ranges over slow time based on the radar data. Obtaining 320 the data matrix comprises determining the data matrix through performing a fast Fourier transform along fast time of the radar data. Since, in the example of Fig. 3, the real values of the radar data are transformed into complex values of the data matrix, the length of the S dimension is reduced from 64 to 32. In other examples than the one shown in Fig. 3, the size of the data matrix may be the same size as the size of (a frame of) the radar data or may be modified otherwise.

The method 300 further comprises determining 330 the data matrix using a moving target indicator. The data matrix may in this way indicate ranges of moving targets while static or quasi-static targets are attenuated. In the example of Fig. 3, the size of the data matrix remains unchanged after applying the moving target indicator on the data matrix.

The method 300 further comprises determining 340 a compact data matrix of reduced size through compressing the data matrix over slow time (over chirps). Further, the data matrix is averaged over the 3 channels of the radar data. The resulting compact data matrix has a size ofC=1, S = 32.

The method 300 further comprises filtering 350 the compact data matrix through performing a Gaussian smoothing on the compact data matrix and determine 360 a range interval of a target based on the filtered compact data matrix. The range interval is determined through determining a local peak in the compact data matrix (local peak search).

The method 300 may enable a determination of features of a movement of the target. The method 300 therefore comprises determining 370 at least one of a velocity, a signal magnitude, an azimuth and an elevation of the target for the determined range interval. Details of how the features are determined are given in the following:
The method 300 further comprises processing exclusively the determined range interval in the data matrix for determining the movement of the target. In the example of Fig. 3, processing exclusively the determined range interval in the data matrix comprises determining 380 a velocity representation of the data matrix through performing a Fourier transform along the slow time of the data matrix for the determined range interval. The Fourier transform is applied on the data matrix which is obtained after using the moving target indicator.

The method 300 further comprises determining 385 a velocity of the movement of the target through determining a peak in the velocity representation of the data matrix.

The method 300 may thus enable an "early" target detection on range profiles instead of range doppler images which may reduce power consumption, memory and compute resources compared to conventional gesture recognition. The relevant processing for extracting features of the movement may be limited to this range interval which may increase the processing efficiency. By, e.g., doing an early detection of the closest target already on the range profiles, and doing a velocity transformation only on the relevant range profile bin, the time needed to compute a gesture may be reduced - depending on the application, it may be reduced by a factor of 2.

For further feature extraction, the method 300 comprises applying 390 a phase-comparison monopulse on the velocity representation of the data matrix for the determined peak in the velocity representation. Thus, azimuth and elevation may be extracted in an efficient way.

The method 300 further comprises extracting a time-series of at least one feature of the movement and recognizing a gesture based on the time-series of the at least one feature of the movement (not shown in Fig. 3).

Referring back to Fig. 1, in a second example, the processing circuitry 110 is configured to process exclusively the determined range interval in the data matrix through determining a phase shift along the slow time of the data matrix for the determined range interval and determining a velocity of the movement of the target based on the phase shift. The latter processing may be performed optionally or additionally to the processing of the first example above. The processing circuitry 110 may compare the phases of the chirps with each other and detect differences of said phases. The phase shift may be converted into an estimate of the target's velocity, e.g., using known characteristics of the radar sensor or the chirp parameters.

In addition to the advantages mentioned above, the second example may be based on a phase shift determination and may therefore dispense with a more elaborate determination of a velocity representation as in the first example. The second example may thus reduce the computational complexity even more.

The phases may in some examples exhibit ambiguities. In these cases, the processing circuitry 110 may be configured to determine the velocity of the movement through unwrapping the phase shift. Any unwrapping technique may be performed for determining the velocity, e.g., simple unwrapping (by adding or subtracting multiples of 2π to the phase values), branch-but unwrapping, least squares unwrapping, or alike.

For further feature extraction, the processing circuitry 110 may be configured to apply a phase-comparison monopulse to phases of multiple channels in the compact data matrix. The processing circuitry 110 may, in this manner, extract an azimuth and elevation angle.

In applications having extremely limited resources, the number of chirps may be reduced to save power. For instance, the data matrix may comprise at most two chirps (or at most three, at most four, or at most five chirps). Conventional approaches may fail to provide an acceptable accuracy in gesture detection when only such a small number of chirps is present in the data matrix. By contrast, since the second example is based on phase shift detection, it may enable a gesture detection even with such an extremely reduced number of chirps.

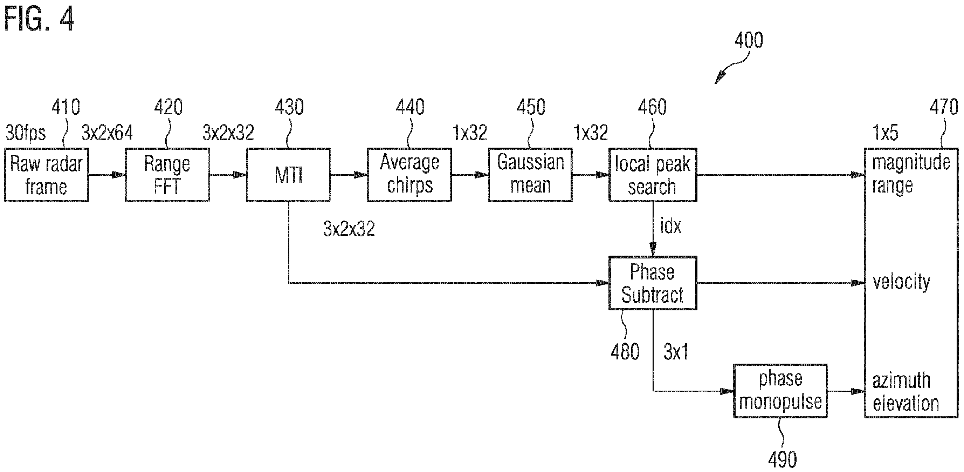

A concrete implementation of the second example is further illustrated by **Fig. 4.** Fig. 4 shows a flowchart of an example of a method 400 for gesture recognition. The method 400 may be executed by a processing circuitry of an apparatus for gesture recognition, such as apparatus 100.

The method 400 may comprise the steps 310 to 370 of method 300. Thus, the steps 410 to 470 may correspond to steps 310 to 370. However, in Fig. 4, the data matrix has a size of only R = 3, C = 2, S = 32, thus, it comprises only two chirps, reducing the power consumption of the radar sensor. In other examples however, the number of chirps included in the data matrix may be more than two.

The method 400 further comprises processing exclusively the determined range interval in the data matrix through determining 480 a phase shift along the slow time of the data matrix for the determined range interval and determining a velocity of the movement of the target based on the phase shift. The phase shift is determined using phase subtraction. Small displacements in a range bin i over time, n(T2) - rᵢ(T1) may manifest in a proportional phase shift Δφᵢ(T1, T2). Rather than computing the spectrum with an FFT along chirps in the slow time axis to estimate the velocity of a target, the phase shift Δφᵢ may be directly employed as an approximation thereof. The SNR of the measurement may be increased by integrating across the receive channels R.

For additional feature extraction, the method 400 further comprises applying 490 a phase-comparison monopulse to phases of multiple channels in the compact data matrix. The phase difference across the receive channels may be used in the detected range bin to calculate the horizontal and vertical angle using the phase-comparison monopulse.

The method 400 may enable an "early" target detection on range profiles instead of range doppler images which may reduce power consumption, memory and compute resources compared to conventional gesture recognition. The relevant processing for extracting features of the movement may be limited to this range interval which may increase the processing efficiency. Additionally, the method 400 may be viable for very limited chirp numbers and may thus have the potential for reducing the resource consumption even more. For example, the frame size may be reduced from 32 chirps to only 2, and instead of the previously used fast Fourier transformation, the method 400 includes a simpler subtraction of phases in the range bin of interest. After phase unwrapping, the result may be usable in the same way as in previous approaches. Depending on the application, this may reduce the amount of RAM and the required compute budget as well as a reduction of an overall consumed energy.

Referring back to Fig. 1, the processing circuitry 110 is further configured to extract a time-series of at least one feature of the movement and recognize a gesture based on the time-series of the at least one feature of the movement. For example, the time-series may be extracted by tracking the feature over a specific time. For ensuring alignment of the time-series, the processing circuitry 110 may be configured to extract the time-series of the at least one feature through starting the time-series at a data point with a minimum range. With the latter configuration, the time-series of a feature may be more easily associated to a specific gesture causing the characteristic course of the time-series.

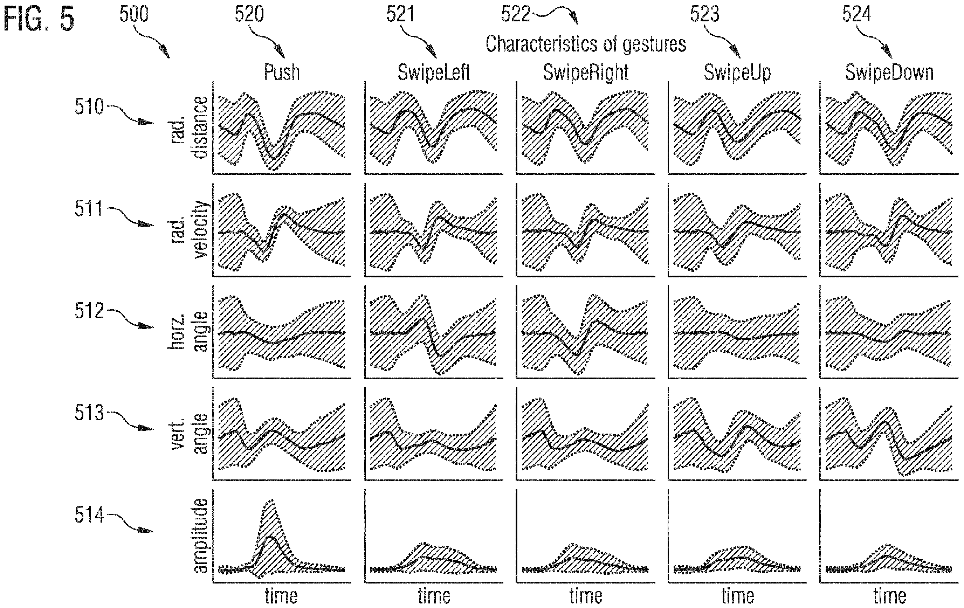

For instance, the time-series may be mapped to corresponding gestures. **Fig. 5** illustrates a table 500 of an example of a time-series of features 510 - 514 associated to examples of gestures 520 - 524. The time-series of features shown in Fig. 5 are radial distance (range) 510, radial velocity 511, horizontal angle (azimuth) 512, vertical angle (elevation) 513, and amplitude (signal magnitude) 514. There are five examples of time-series shown for each of the features 510 - 514. Each of the five examples correspond to a specific gesture of the gestures 520 - 524. The examples of gestures shown in Fig. 5 are hand gestures including push 520, swipe left 521, swipe right 522, swipe up 523, and swipe down 524.

The processing circuitry 110 may recognize the gesture using any gesture recognition technique, such as probabilistic methods like hidden Markov models, similarity measurements like dynamic time warping, or alike. In some examples, the processing circuitry 110 is configured to recognize the gesture through using a trained machine-learning model. The trained machine-learning model may, e.g., be based on a trained recurrent neural network, a convolutional neural network, a support vector machine or alike.

The trained machine-learning model may be a data structure and/or set of rules representing a statistical model that the processing circuitry 110 uses to recognize gestures without using explicit instructions, instead relying on models and inference. The data structure and/or set of rules represents learned knowledge (e.g., based on training performed by a machine-learning algorithm). For example, in machine-learning, instead of a rule-based transformation of data, a transformation of data may be used, that is inferred from an analysis of historical and/or training data. In the proposed technique, the content of time-series of features may be analyzed using the trained machine-learning model (i.e., a data structure and/or set of rules representing the model).

The machine-learning model may be trained in an external training using a machine-learning algorithm. The term "machine-learning algorithm" denotes a set of instructions that are used to create, train or use a machine-learning model. For the machine-learning model to analyze the time-series of features, the machine-learning model may be trained using training and/or historical time-series of features as input and training content information (e.g., labels indicating the corresponding gestures) as output.

The apparatus 100 may enable a power-efficient operation mode, e.g., a standby mode, of the radar sensor in which the frame rate, the number of chirps, samples or alike of the radar sensor is reduced, such that the power consumption of the radar sensor may be likewise reduced. Alternatively or additionally, the apparatus 100 may enable an operation mode of the radar sensor in which the frame rate of the radar sensor is increased, such that the extracted time-series exhibit a higher accuracy. The apparatus 100 may, for instance, be communicatively coupled to the radar sensor, e.g., via the interface circuitry 120, and send a trigger to the radar sensor to activate the one or the other mode.

For example, the processing circuitry 110 may be further configured to determine whether a target is present based on the data matrix and, in response to determining that a target is present, trigger the radar sensor to increase at least one of a frame rate, a number of chirps per frame and a number of samples per chirp of the radar sensor. Thus, the radar sensor may be in a sleeping mode as long as no target is detected by the apparatus 100, and the apparatus 100 may wake the radar sensor up when a target is present. In yet further examples, the processing circuitry 110 may be configured to, in response to determining that no target is present, trigger the radar sensor to decrease the at least one of the frame rate, the number of chirps and the number of samples. For instance, the frame rate of the radar sensor may be reduced from 30 frames per second (in operation mode) to 3 frames per second (in power-efficient mode). Thus, only if a motion is detected in the field of view of the radar sensor, gesture detection may be activated.

**Fig. 6** illustrates an example of a radar system 600. The radar system 600 comprises an apparatus 610 for gesture recognition as described herein, such as the apparatus 100, and the radar sensor 620. The radar sensor 620 is configured to acquire the radar data.

The radar sensor 620 may, for instance, be an FMCW (Frequency-Modulated Continuous Wave) radar sensor. The radar sensor 620 may be configured to emit chirps, e.g., spanning a frequency range from f_{low} = 58,5 GHz (Gigahertz) to f_{high} = 62,5 GHz, inducing a range resolution Δr = 37,5 mm (millimeter). The radar sensor 620 may receive the reflected radio frequency signal, e.g., three receive antennas which may be arranged in an L-shape. This may allow to estimate the angle of the scattering target in two planes. The received signal of the chirps may be converted to an intermediate frequency signal. Then, anti-aliasing filtering, and digitization with, e.g., 64 samples at 2 MHz (Megahertz) may be performed, leading to a maximum resolvable range rₘₐₓ = 1,2 m (meter). The radar sensor 620 may send bursts of chirps, e.g., with a frame rate of 33,3 Hz (Hertz) where the individual chirps are separated by a pulse repetition time (TPRT) of 300 µs (microseconds). The bursts may include a specific number of chirps, e.g., 32 or 2. Hence, each burst may be indicated by a three-dimensional array.

Although the apparatus 610 and the radar sensor 620 are depicted as separate blocks in Fig. 6, in other examples, the apparatus 610 may in part or in entirety be included in the radar sensor 620, which thus correspondingly includes all or part of the processing circuitry (e.g., processing circuitry 110) of the apparatus 610.

In case the apparatus 610 is only partially included in the radar sensor 620, the radar system 600 may include distributed processing circuitry carrying out respective parts of the processing steps, e.g., in the form of first processing (sub-) circuitry included in the radar sensor 620, and second processing (sub-) circuitry external to the sensor and in communication with the first processing circuitry through interface circuitry (e.g., interface circuitry 120), for instance, for exchange of data between the first and the second processing circuitry.

In case the apparatus 610 is integrated in the radar sensor 620, the processing circuitry and the radar sensor 620 may be jointly integrated in a single semiconductor chip, or in more than one semi-conductor chip.

In case the apparatus 610 is not included in the radar sensor 620, the processing circuitry may take the form of circuitry external to the radar sensor 620 and may be communicatively coupled therewith through interface circuitry.

More details and aspects of the radar system 600 are explained in connection with the proposed technique or one or more examples described above, e.g., with reference to Fig. 1. The radar system 600 may comprise one or more additional optional features corresponding to one or more aspects of the proposed technique, or one or more examples described above.

The radar system 600 may enable an "early" target detection on range profiles instead of range doppler images which may reduce power consumption, memory and compute resources compared to conventional gesture recognition. The relevant processing for extracting features of the movement may be limited to this range interval which may increase the processing efficiency.

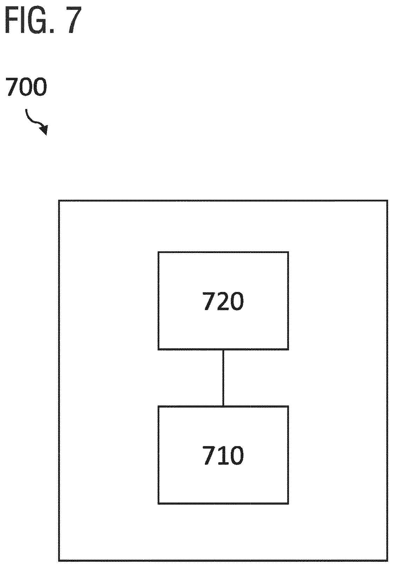

**Fig. 7** illustrates an example of an electronic device 700. The electronic device 700 comprises a radar system 710 as described herein, such as radar system 600, and control circuitry 720.

The control circuitry 720 is configured to control an operation of the electronic device 700 based on the recognized gesture.

The control circuitry 720 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The control circuitry 720 may optionally be coupled to, e.g., read only memory (ROM) for storing software, random access memory (RAM) and/or non-volatile memory.

The electronic device 700 may be any device with a gesture detection functionality. The electronic device 700 may be, e.g., a consumer device. The control circuitry 720 may control the operation of the electronic device 700, e.g., by activating or deactivating a certain function of the electronic device 700 based on the determined gesture, e.g., a certain function may be activated if it is determined that a user of the electronic device 700 has performed a specific gesture.

More details and aspects of the electronic device 700 are explained in connection with the proposed technique or one or more examples described above, e.g., with reference to Figs. 1 and 6. The electronic device 700 may comprise one or more additional optional features corresponding to one or more aspects of the proposed technique, or one or more examples described above.

The electronic device 700 may enable an "early" target detection on range profiles instead of range doppler images which may reduce power consumption, memory and compute resources compared to conventional gesture recognition. The relevant processing for extracting features of the movement may be limited to this range interval which may increase the processing efficiency.

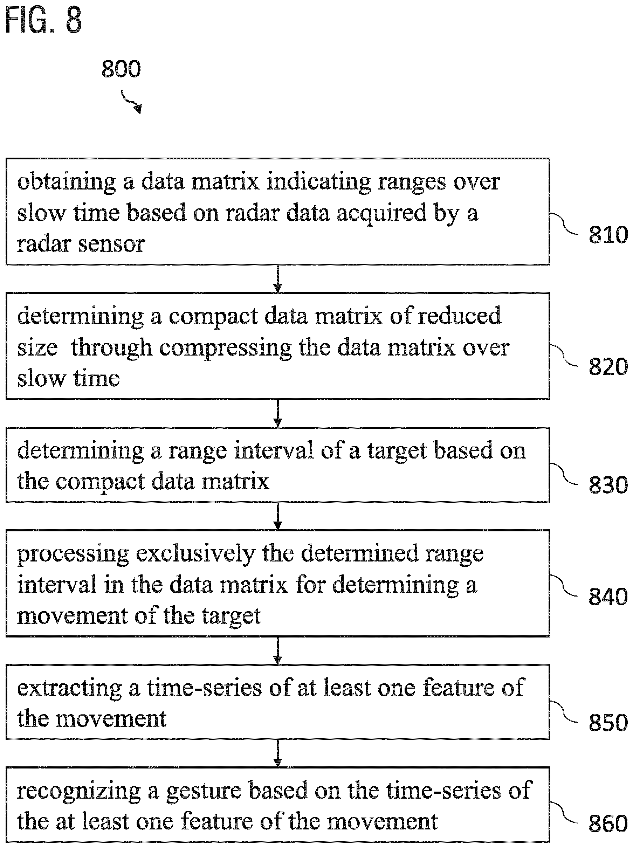

**Fig. 8** illustrates a flowchart of an example of a method 800 for gesture recognition. The method 800 may be executed by an apparatus for gesture recognition as described herein, such as apparatus 100. Further the method 800 may include one ore more steps of method 300 and/or one or more steps of method 400.

The method 800 comprises obtaining 810 obtaining a data matrix indicating ranges over slow time based on radar data acquired by a radar sensor, determining 820 a compact data matrix of reduced size through compressing the data matrix over slow time and determining 830 a range interval of a target based on the compact data matrix. The method 800 further comprises processing 840 exclusively the determined range interval in the data matrix for determining a movement of the target, extracting 850 a time-series of at least one feature of the movement and recognizing 860 a gesture based on the time-series of the at least one feature of the movement.

More details and aspects of the method 800 are explained in connection with the proposed technique or one or more examples described above, e.g., with reference to Fig. 1. The method 800 may comprise one or more additional optional features corresponding to one or more aspects of the proposed technique, or one or more examples described above.

The method 800 may enable an "early" target detection on range profiles instead of range doppler images which may reduce power consumption, memory and compute resources compared to conventional gesture recognition. The relevant processing for extracting features of the movement may be limited to this range interval which may increase the processing efficiency.

In the following, some examples of the proposed technique are presented:
An example (e.g., example 1) relates to an apparatus for gesture recognition, comprising processing circuitry configured to obtain a data matrix indicating ranges over slow time based on radar data acquired by a radar sensor, determine a compact data matrix of reduced size through compressing the data matrix over slow time, determine a range interval of a target based on the compact data matrix, process exclusively the determined range interval in the data matrix for determining a movement of the target, extract a time-series of at least one feature of the movement, and recognize a gesture based on the time-series of the at least one feature of the movement.

Another example (e.g., example 2) relates to a previous example (e.g., example 1) or to any other example, further comprising that the processing circuitry is configured to determine the range interval of the target nearest and/or the target second nearest to the radar sensor based on the compact data matrix.

Another example (e.g., example 3) relates to a previous example (e.g., one of the examples 1 or 2) or to any other example, further comprising that the processing circuitry is configured to process exclusively the determined range interval in the data matrix through determining at least one of a velocity, an azimuth and an elevation of the target for the determined range interval .

Another example (e.g., example 4) relates to a previous example (e.g., one of the examples 1 to 3) or to any other example, further comprising that the processing circuitry is configured to process exclusively the determined range interval in the data matrix through determining a velocity representation of the data matrix for the determined range interval.

Another example (e.g., example 5) relates to a previous example (e.g., example 4) or to any other example, further comprising that the processing circuitry is configured to determine the velocity representation of the data matrix through performing a Fourier transform along the slow time of the data matrix for the determined range interval.

Another example (e.g., example 6) relates to a previous example (e.g., one of the examples 4 or 5) or to any other example, further comprising that the processing circuitry is configured to determine a velocity of the movement of the target through determining a peak in the velocity representation of the data matrix.

Another example (e.g., example 7) relates to a previous example (e.g., one of the examples 4 to 6) or to any other example, further comprising that the processing circuitry is configured to apply a phase-comparison monopulse on the velocity representation of the data matrix.

Another example (e.g., example 8) relates to a previous example (e.g., the examples 6 and 7), further comprising that the processing circuitry is configured to apply the phase-comparison monopulse on the velocity representation for the determined peak in the velocity representation.

Another example (e.g., example 9) relates to a previous example (e.g., one of the examples 1 to 8) or to any other example, further comprising that the processing circuitry is configured to process exclusively the determined range interval in the data matrix through determining a phase shift along the slow time of the data matrix for the determined range interval, and determining a velocity of the movement of the target based on the phase shift.

Another example (e.g., example 10) relates to a previous example (e.g., example 9) or to any other example, further comprising that the processing circuitry is configured to determine the velocity of the movement through unwrapping the phase shift.

Another example (e.g., example 11) relates to a previous example (e.g., one of the examples 9 or 10) or to any other example, further comprising that the processing circuitry is configured to apply a phase-comparison monopulse to phases of multiple channels in the compact data matrix.

Another example (e.g., example 12) relates to a previous example (e.g., one of the examples 1 to 11) or to any other example, further comprising that the processing circuitry is configured to determine the range interval of the target through determining a local peak in the compact data matrix.

Another example (e.g., example 13) relates to a previous example (e.g., one of the examples 1 to 12) or to any other example, further comprising that the processing circuitry is configured to determine the data matrix through performing a Fourier transform along fast time of the radar data.

Another example (e.g., example 14) relates to a previous example (e.g., one of the examples 1 to 13) or to any other example, further comprising that the processing circuitry is configured to determine the data matrix using a moving target indicator.

Another example (e.g., example 15) relates to a previous example (e.g., one of the examples 1 to 14) or to any other example, further comprising that the processing circuitry is configured to determine the compact data matrix through compressing the data matrix over multiple channels of the radar data.

Another example (e.g., example 16) relates to a previous example (e.g., one of the examples 1 to 15) or to any other example, further comprising that the processing circuitry is further configured to filter the compact data matrix and determine the range interval based on the filtered compact data matrix.

Another example (e.g., example 17) relates to a previous example (e.g., example 16) or to any other example, further comprising that the processing circuitry is configured to filter the compact data matrix through performing a Gaussian smoothing on the compact data matrix.

Another example (e.g., example 18) relates to a previous example (e.g., one of the examples 1 to 17) or to any other example, further comprising that the data matrix comprises at most two chirps of the radar data.

Another example (e.g., example 19) relates to a previous example (e.g., one of the examples 1 to 18) or to any other example, further comprising that the processing circuitry is further configured to determine whether a target is present based on the data matrix, and in response to determining that a target is present, trigger the radar sensor to increase a frame rate of the radar sensor.

Another example (e.g., example 20) relates to a previous example (e.g., example 19) or to any other example, further comprising that the processing circuitry is further configured to, in response to determining that no target is present, trigger the radar sensor to decrease the frame rate.

Another example (e.g., example 21) relates to a previous example (e.g., one of the examples 1 to 20) or to any other example, further comprising that the feature is at least one of a range, a velocity, a signal amplitude, an elevation and an azimuth of the target.

Another example (e.g., example 22) relates to a previous example (e.g., one of the examples 1 to 21) or to any other example, further comprising that the processing circuitry is configured to recognize the gesture through using a trained machine-learning model.

Another example (e.g., example 23) relates to a previous example (e.g., one of the examples 1 to 22) or to any other example, further comprising that the processing circuitry is configured to extract the time-series of the at least one feature through starting the time-series at a data point with a minimum range.

An example (e.g., example 24) relates to a radar system, comprising an apparatus according to a previous example (e.g., to any one of examples 1 to 23) or any other example, and the radar sensor, wherein the radar sensor is configured to acquire the radar data.

An example (e.g., example 25) relates to an electronic device, comprising a radar system according to a previous example (e.g., to example 24) or any other example, and control circuitry configured to control an operation of the electronic device based on the recognized gesture.

An example (e.g., example 26) relates to a method for gesture recognition, comprising obtaining a data matrix indicating ranges over slow time based on radar data acquired by a radar sensor, determining a compact data matrix of reduced size through compressing the data matrix over slow time, determining a range interval of a target based on the compact data matrix, processing exclusively the determined range interval in the data matrix for determining a movement of the target, extracting a time-series of at least one feature of the movement, and recognizing a gesture based on the time-series of the at least one feature of the movement.

Another example (e.g., example 27) relates to a non-transitory machine-readable medium having stored thereon a program having a program code for performing the method of a previous (e.g., example 26) or any other example, when the program is executed on a processor or a programmable hardware.

Another example (e.g., example 28) relates to a program having a program code for performing the method of a previous example (e.g., example 26) or any other example, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

**1.** An apparatus (100) for gesture recognition, comprising processing circuitry (110) configured to:
obtain a data matrix indicating ranges over slow time based on radar data acquired by a radar sensor;
determine a compact data matrix of reduced size through compressing the data matrix over slow time;
determine a range interval of a target based on the compact data matrix;
process exclusively the determined range interval in the data matrix for determining a movement of the target;
extract a time-series of at least one feature of the movement; and
recognize a gesture based on the time-series of the at least one feature of the movement.

**2.** The apparatus (100) of claim 1, wherein the processing circuitry (110) is configured to determine the range interval of the target nearest and/or the target second nearest to the radar sensor based on the compact data matrix.

**3.** The apparatus (100) of any one of the previous claims, wherein the processing circuitry (110) is configured to process exclusively the determined range interval in the data matrix through determining at least one of a velocity, an azimuth and an elevation of the target for the determined range interval .

**4.** The apparatus (100) of any one of the previous claims, wherein the processing circuitry (110) is configured to process exclusively the determined range interval in the data matrix through determining a velocity representation of the data matrix for the determined range interval.

**5.** The apparatus (100) of claim 4, wherein the processing circuitry (110) is configured to determine a velocity of the movement of the target through determining a peak in the velocity representation of the data matrix.

**6.** The apparatus (100) of any one of claims 4 or 5 , wherein the processing circuitry (110) is configured to apply a phase-comparison monopulse on the velocity representation for the determined peak in the velocity representation.

**7.** The apparatus (100) of any one of the previous claims, wherein the processing circuitry (110) is configured to process exclusively the determined range interval in the data matrix through:
determining a phase shift along the slow time of the data matrix for the determined range interval; and
determining a velocity of the movement of the target based on the phase shift.

**8.** The apparatus (100) of claim 7, wherein the processing circuitry (110) is configured to apply a phase-comparison monopulse to phases of multiple channels in the compact data matrix.

**9.** The apparatus (100) of any one of the previous claims, wherein the processing circuitry (110) is configured to determine the compact data matrix through compressing the data matrix over multiple channels of the radar data.

**10.** The apparatus (100) of any one of the previous claims, wherein the data matrix comprises at most two chirps of the radar data.

**11.** The apparatus (100) of any one of the previous claims, wherein the processing circuitry (110) is further configured to:
determine whether a target is present based on the data matrix; and
in response to determining that a target is present, trigger the radar sensor to increase at least one of a frame rate, a number of chirps per frame and a number of samples per chirp of the radar sensor.

**12.** The apparatus (100) of claim 11, wherein the processing circuitry (110) is further configured to, in response to determining that no target is present, trigger the radar sensor to decrease the at least one of the frame rate, the number of chirps per frame and the number of samples per chirp.

**13.** A radar system (600), comprising:
an apparatus (610) according to any one of claims 1 to 12; and
the radar sensor (620), wherein the radar sensor (620) is configured to acquire the radar data.

**13.** An electronic device (700), comprising:
a radar system (710) according to claim 13, and
control circuitry (720) configured to control an operation of the electronic device based on the recognized gesture.

**15.** A method (800) for gesture recognition, comprising:
obtaining (810) a data matrix indicating ranges over slow time based on radar data acquired by a radar sensor;
determining (820) a compact data matrix of reduced size through compressing the data matrix over slow time;
determining (830) a range interval of a target based on the compact data matrix;
processing (840) exclusively the determined range interval in the data matrix for determining a movement of the target;
extracting (850) a time-series of at least one feature of the movement; and
recognizing (860) a gesture based on the time-series of the at least one feature of the movement.
